# EUROPÄISCHE PATENTANMELDUNG

(11) **EP 1 170 395 A1**
(43) Veröffentlichungstag der Anmeldung: **09.01.2002**
(21) Anmeldenummer: 01113456.6
(22) Anmeldetag: 02.06.2001
(51) Int. Cl.: C23C 4/12, C21B 3/04, C21B 3/06, C22B 7/02

(54) **Verfahren und Anlage zur Aufbereitung von beim Sprühkompaktieren in Form von Pulver anfallendem metallischem Overspray-Material**

(30) Priorität: 30.06.2000 DE 10031988
(71) Anmelder: SMS Demag AG, 40237 Düsseldorf (DE)
(72) Erfinder: Fuchs, Reinhard Dr.-Ing., 41849 Wassenberg (DE)
(74) Vertreter: Valentin, Ekkehard, Dipl.-Ing.

(57) **Zusammenfassung**

Ein Verfahren zur Aufbereitung bzw. Aufarbeitung von beim Sprühkompaktieren anfallendem metallischem Overspray-Material in Form eines im Abgas mitgeführten Pulvers ist dadurch gekennzeichnet, dass das Pulver aus dem Gasstrom abgetrennt, gesammelt, unter Schutz durch Inertgas chargenweise mit Zuschlagstoffen (16, 17) versetzt in eine Schlackenschmelze (36) eingeleitet und darin unter Wärmezufuhr mittels Sedimentation flüssiges Metall (37) abgeschieden wird. Eine Anlage zur Durchführung des Verfahrens weist Mittel (10 - 12) zum Abtrennen von Overspray-Material aus dem Abgasstrom (2) einer Sprühkompaktierungsanlage sowie zum Sammeln (13, 15) und Versetzen des Materials mit Zuschlagstoffen (16, 17) und Schmelzen in einem Doppelraum-Elektro-Schmelzofen (25) auf, wonach unterschiedliche Phasen, Schlacke (36) und Metall (37), durch Sedimentation in einem beheizbaren Absetzraum (33), voneinander getrennt und abgezogen werden.

## Beschreibung

Die Erfindung betrifft ein Verfahren sowie eine Anlage zur Aufbereitung bzw. Aufarbeitung von beim Sprühkompaktieren anfallendem metallischem Overspray-Material in Form eines im Abgas mitgeführten Pulvers.

Das Sprühkompaktieren ist ein neuartiges Formgebungsverfahren zur Herstellung endabmessungsnaher Vorprodukte unterschiedlicher Geometrie aus metallischen Werkstoffen, einschließlich neuer Verbundwerkstoffe und Mehrlagen-Materialien.

Das Verfahren ist gekennzeichnet durch schnelle Erstarrung kleinster Metallpartikel und unmittelbare Kompaktierung zum Produkt ohne den Verfahrensschritt "Gießen" und ohne den Zwischenschritt "Pulvererzeugung".

Die wesentlichen Verfahrensschritte des Sprühkompaktierens sind:
- Zerstäuben eines flüssigen Metallstrahls mit Hilfe eines inerten Gases,
- spontane Abkühlung der erzeugten Tropfen durch Sprühgas auf eine mittlere Temperatur zwischen T_{liquidus} und T_{solidus},
- Kompaktieren der Partikel unter Nutzung ihrer hohen Temperatur und kinetischen Energie zu einem dichten Vorprodukt auf einer Auffangfläche.

Das Verfahren beruht auf dem Prinzip des schnellen Erstarrens, "rapid solidification", wobei Materialien aus der flüssigen in die feste Phase überführt und gleichzeitig zu Knüppeln, Rohren oder Blechen geformt werden.

Die Vorteile des Sprühkompaktierens sind:
- niedrige Investitionskosten,
- geringe Anzahl von Prozessschritten bis zum Halbzeug,
- große Flexibilität hinsichtlich Form und Material,
- Wirtschaftlichkeit bei kleinen Produktionsmengen.

Sprühkompaktierte Produkte zeichnen sich durch hervorragende technologische Eigenschaften aus. Die schnelle feindisperse Erstarrung ermöglicht die Herstellung seigerungsfreier Produkte. Die feine, homogene Struktur führt außerdem zu isotropen physikalischen Eigenschaften.

Beispielsweise bei einer angenommenen Leistung einer Sprühkompaktieranlage für Aluminium-Rundknüppel von 10000 t/a fällt eine Overspray-Materialmenge von ca. 4000 t/a, d. h. pro Tag ca. 16 t, an. Dieses Material kann aufgrund seiner Erzeugungstechnik weder direkt verkauft, noch zu einem verkaufsfähigen Produkt umgewandelt werden. Infolge des Einsatzes der meist besonderen Legierungen beim Sprühkompaktieren mit hohem Legierungselementanteil ist eine Rezirkulierung in den Sprühkompaktierprozess aus wirtschaftlichen Gründen zwingend erforderlich.

Die vorliegende Erfindung betrifft ein Verfahren und eine Anlage zur Aufbereitung von Sprühkompaktiermaterial, welches beim Sprühkompaktieren zwangsläufig anfällt. Aus Sicherheitsgründen muss das pulverförmige metallische Material bei einer Korngröße im Mittel von ca. 30 µm stets unter inerter Atmosphäre gehalten werden, um gefährliche Staubexplosionen bei Zutritt von Sauerstoff zu vermeiden.

Der Erfindung liegt die Aufgabe zugrunde, das in einer Sprühkompaktieranlage zwangsläufig anfallende Overspray-Material zu erfassen und unter kontrollierbar inerten Bedingungen zu wiederverwertbaren Endprodukten aufzubereiten, um dadurch einerseits Staubexplosionen zu verhindern und andererseits die Kosten des Sprühkompaktierverfahrens zu verringern, und das zunächst als unverwertbar anfallende Material wiederverwertbar aufzubereiten und dabei insbesondere ein hohes Ausbringen der im Overspray-Material enthaltenen Metallphase zu ermöglichen.

Zur Lösung der Aufgabe wird mit dem im Oberbegriff von Anspruch 1 angegebenen Verfahren vorgeschlagen, dass das Pulver aus dem Gasstrom abgetrennt, gesammelt, unter Schutz durch Inertgas chargenweise mit Zuschlagstoffen versetzt in eine Schlackenschmelze eingeleitet und darin unter Wärmezufuhr mittels Sedimentation flüssiges Metall abgeschieden wird. Dabei fallen mit großem Vorteil über 95 % des im Overspray-Material enthaltenen Metallanteiles als wiederverwertbares Wertprodukt an.

Bei der Aufarbeitung von Overspray-Material, insbesondere aus AluminiumLegierungen, aus einer Sprühkompaktieranlage einschließlich sicherem Transport unter Inertgas von der Filteranlage zum Ofen, wurden auf dem Versuchswege bereits Wirkungsgrade beim Schmelzen von über 98 % erreicht.

Erfindungswesentlich sieht das Verfahren weiter vor, dass es gleichzeitig mit der Sprühkompaktierung eines Objektes durchgeführt wird, wobei das dabei anfallende und staubförmig im Abgas mitgeführte Overspray-Material abgeschieden und direkt in eine dafür vorgesehene Verarbeitungsanlage eingeführt wird.

Die Durchführung des Verfahrens zeitgleich mit der Sprühkompaktierung ist deshalb von Vorteil, insbesondere für das Ausbringen der Metallphase, weil Schmelzversuche gezeigt haben, dass ein hohes Ausbringen der Metallphase von einem Overspray-Material, welches bereits Kontakt mit Luft-Sauerstoff hatte, auch mit hohem Einsatz von Flussmitteln bzw. Schlacke nicht zu erreichen ist. Dabei treten große Metallverluste insbesondere dadurch auf, dass Metalltropfen in der Schlacke verbleiben, weil die sie umgebende Oxidschicht ein Zusammengehen mit anderen kleinen Tropfen zur Bildung größerer Tropfen verhindert und damit sie bei einem normalen Einschmelzprozess im Elekro-Ofen keine Gelegenheit zum Absetzen in der Schmelze haben.

Eine Ausgestaltung des Verfahrens sieht vor, dass das Overspray-Material aus dem heißen Abgasstrom einer Sprüh-Kompaktierungsanlage mit Stickstoff als Sprühgas ausgefiltert und weiterhin unter Schutzgas chargenweise gesammelt und mit dosierbar bemessenen Anteilen von Zuschlagstoffen, insbesondere Schmelzsalz, in Chargen versetzt, diese unter fortgesetzter Zufuhr von Wärme in die Schmelze eingeführt, geschmolzen und darin durch Sedimentation flüssiges Metall aus der Schlacke absetzen gelassen wird und die beiden Phasen in getrennten Abstichen abgezogen werden. Dabei ist es wichtig, dass die Aufarbeitung des Pulvers in Salzschlacke in einer ununterbrochenen Folge von Arbeitsschritten im Anschluss an dessen Gewinnung aus dem heißen Abgasstrom einer Sprüh-Kompaktierungsanlage unter Schutzgas vorgenommen wird.

Und schließlich sieht eine besonders vorteilhafte Ausgestaltung des Verfahrens nach der Erfindung vor, dass das aus dem Heißgasstrom ausgefilterte und mit Zuschlagstoff versetzte Material durch eine zentrale Bohrung einer als Anode geschalteten Elektrode in den Schmelzraum eines Schmelze enthaltenden Doppelraum-Ofens eingeführt und darin durch Widerstands-Elektroheizung im Spannungsgefälle zwischen der am Boden des Schmelzraumes angeordneten Kathode und einer Anode geschmolzen wird.

Eine Anlage zur Aufbereitung von beim Sprühkompaktieren in Form von Pulver anfallendem, metallischem Overspray-Material, insbesondere zur Durchführung des Verfahrens nach der Erfindung, ist gekennzeichnet durch die miteinander zusammen wirkenden, im Kennzeichnungsteil von Anspruch 6 angegebenen Elemente.

Eine Ausgestaltung der Anlage sieht vor, dass sie ein in sich abgeschlossenes System darstellt, welches mit einer oder mehreren Schutzgasquellen derart verbunden ist, dass zumindest im Elektro-Schmelzofen ein Gasüberdruck relativ zur Umgebungsatmosphäre herrscht.

Weitere Ausgestaltungen der Anlage sind entsprechend den Unteransprüchen vorgesehen. Einzelheiten, Merkmale und Vorteile der Erfindung ergeben sich ferner aus der nachstehenden Erläuterung eines in den Zeichnungen schematisch dargestellten Ausführungsbeispieles.

Es zeigen:
- Fig. 1: einen Anlagenstammbaum des erfindungsgemäßen Verfahrens,
- Fig.2: im Schnitt der Ebene B-B in Fig. 1 einen Doppelraum-Elektro-Schmelzofen,
- Fig. 3: den Doppelraum-Elektro-Schmelzofen in Draufsicht mit teilweise abgenommenen Deckeln,
- Fig. 4: im Schnitt der Ebene A-A in Fig. 3 den Absetzraum mit dahinterliegendem Schmelzraum.

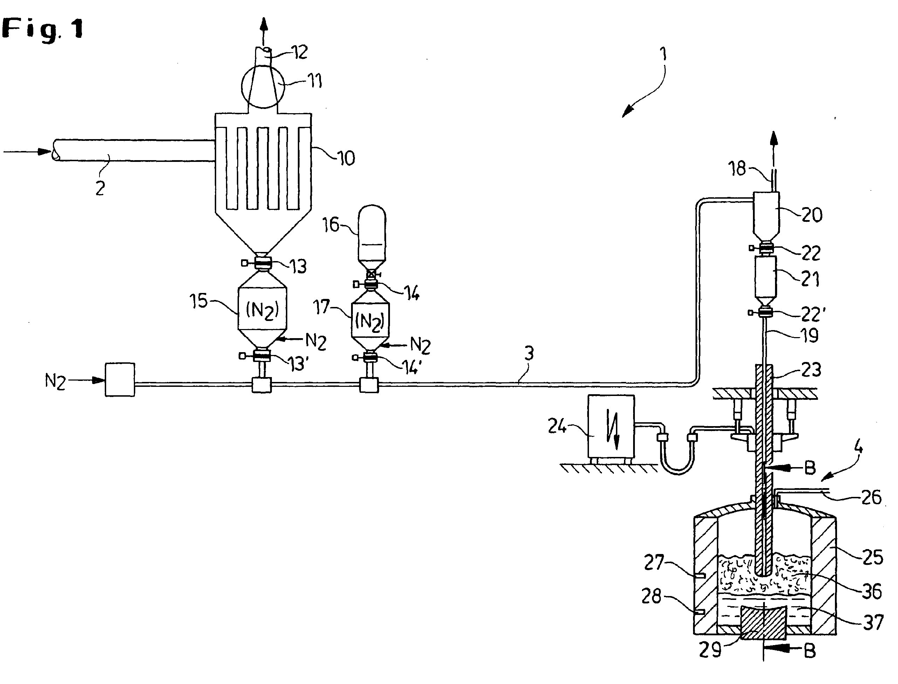

Der in Figur 1 dargestellte Anlagenstammbaum 1 des erfindungsgemäßen Verfahrens zeigt eine Heißgasleitung 2, welche im Anschluss an eine Sprühkompaktierungsanlage (nicht dargestellt) metallisches Overspray-Material in Form von Pulver im Gasstrom mitführt, das über eine Gastransportleitung 3 zu einer Ofenstation 4 gefördert wird.

An die Heißgasleitung 2 ist ein Heißgasfilter 10 angeschlossen. Dieses kann in an sich bekannter Weise mit temperaturunempfindlichen Filterkerzen ausgestattet sein, beispielsweise aus porösem Korundmaterial, welche Feststoffe vom abzuleitenden Reingas trennen. Im Oberteil des Heißgasfilters 10 befindet sich ein Heißgas-Saugzug-Gebläse 11, welches das von Feststoffpartikeln gereinigte Abgas durch die Abgasleitung 12 abführt. Im unteren Bereich des Heißgasfilters 10 befindet sich, abschottbar durch Schieber 13, 13', ein Sammelbehälter 15 für abgeschiedene Feststoffstäube mit Anschluss an eine Inertgasquelle (N₂). Der Feststoffbehälter 15 steht über eine kurze Stichleitung in Verbindung mit der Gastransportleitung 3 zum weiteren Transport der Feststoffstäube zur Ofenstation 4. An diese Gastransportleitung 3 zum pneumatischen Feststofftransport ist weiterhin eine Behältergruppe mit einem Transportbehälter 16 für Zuschlagstoffe (Salz) mit einem Schleusensystem angeschlossen, umfassend Klappe und Schieber 14, 14' mit Behälter 17 für Zuschlagstoffe.

Die in die N₂- Leitung eingegebenen Feinstpartikel von metallischem Overspray-Material plus Zuschlagstoffe in Mischung werden in dem mit der Gastransportleitung 3 verbundenen Abscheidebehälter 20, Abscheidezyklon oder Filter, aus dem Gasstrom abgetrennt, während das Reingas durch die Reingasleitung 18 abgeführt wird.

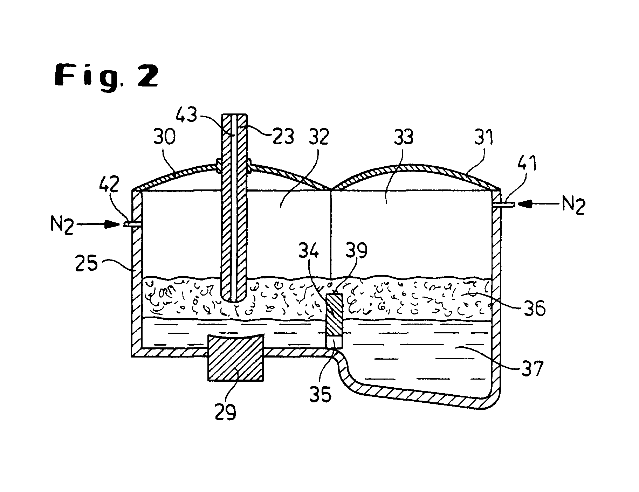

Die abgeschiedenen Feststoffe, Overspray-Material in Mischung mit Zuschlagstoffen, werden mit Hilfe der Chargierschleuse 22, 22' chargenweise im Behälter 21 abgemessen und mit der Eintragsleitung 19 in eine Hohlelektrode 23 und durch deren zentrale Bohrung 43 (Fig. 2) in die bereits flüssige Schlacke 36 des Elektro-Schmelzofens 25 aufgegeben. Darin wird die Schmelztemperatur zwischen der als Anode geschalteten Elektrode 23 und der Boden-Kathode 29 mittels Stromfluss durch kryolitische Salzschlacke mit hohem elektrischem Widerstand erzeugt. Der erforderliche Strombedarf wird durch den Transformator 24 zugeführt. Die unterschiedlichen Phasen, Schlacke 36 und flüssiges Metall 37, werden durch in unterschiedlichen Höhen liegende Abstichöffnungen, 27 für Schlacke und 28 für Metall, aus dem Elektro-Schmelzofen 25 ausgetragen.

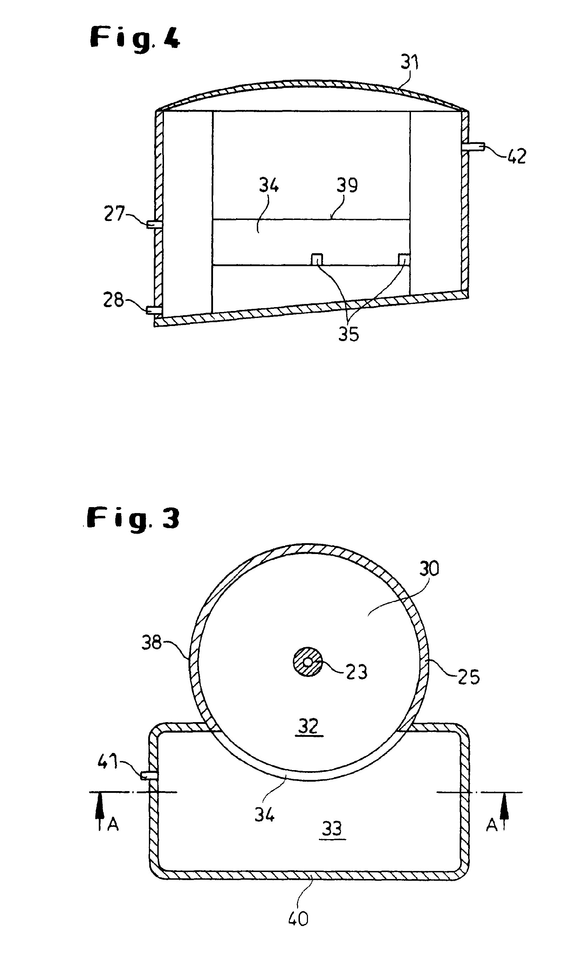

Für die einwandfreie Funktion des Verfahrens ist die Bauart des Doppelraum-Elektro-Schmelzofens 25 von erfindungswesentlicher Bedeutung. Aus der Zusammenschau der Figuren 2 bis 4 und insbesondere aus der Schnittdarstellung gemäß Fig. 2 des Elektro-Schmelzofens 25 nach der Schnittebene B-B in Fig. 1 ist ersichtlich, dass der Doppelraum-Elektro-Schmelzofen 25 in einen Schmelzraum 32 und einen beheizbaren Absetzraum 33 unterteilt ist, zwischen welchen sich ein als Wehr ausgebildeter Wall 34 in Form eines Teils der kreisförmigen Ofenwand 38 des Schmelzraums 32 befindet. Dieser besitzt in Bodennähe Unterlauföffnungen 35 zum Durchtritt der spezifisch schwereren Metallphase 37, und an seiner Oberseite eine Überlaufkante 39 für Übertritt der spezifisch leichteren Salzschlackenphase 36.

Die zur Beheizung des Elektro-Schmelzofens 25 vorgesehenen Elektroden, und zwar die von oben eingeführte Anode 23 und die als Kathode geschaltete Bodenelektrode 29, sind in dieser Polung besonders vorteilhaft, um die Bewegungsrichtung von Metallkationen nach unten zu intensivieren. Abbrandprobleme bei der Kohlenstoffanode entstehen nicht, weil die Ofenatmosphäre durch Zugabe von Stickstoff gemäß Fig. 2 inert gehalten wird. Dazu wird vorteilhaft im Ofenraum ein Überdruck an Inertgas eingestellt. Anstelle des gezeigten Hohlelektrodensytems ist auch der Einsatz einer Chargierlanze neben einer konventionellen Kohlenstoffelektrode denkbar.

Vom Schmelzraum 32 durch den Überlaufwall 34 mit Unterlauföffnungen 35 getrennt, befindet sich ein Absetzraum 33, worin den in der Schlacke noch befindlichen Metalltröpfchen genügend Zeit zum Absetzen gegeben wird. Dieser Absetzraum 33 ist elektrisch derart beheizbar, beispielsweise durch Heizstäbe, Heizplatten, Heizspiralen, dass keine größeren Badströmungen entstehen können. Entsprechend angeordnete Unterlauföffnungen 35 im Wall 34 verhindern mit Sicherheit eine Rückmischung von Metall 37 mit Schlacke 36 im Schmelzraum 32. Der Boden in diesem Ofenteil ist geneigt angeordnet und weist ein Gefälle zur Abstichseite auf.

Der gesamte Elektro-Schmelzofen 25 befindet sich in einer dicht abgeschlossenen Einhausung. Oberhalb des Ofendeckels 30, in der Nähe der Elektrodendurchführung, ist ein Absaug-Anschluss 26 vorgesehen, um eine verhältnismäßig geringe Abgasmenge abzuführen.

In der Anlage sind an geeigneten Stellen Messinstrumente zur kontinuierlichen Überwachung des Sauerstoffgehaltes bzw. des Inertgasgehaltes installiert, jedoch aus Gründen der Übersichtlichkeit in den Verfahrensstammbaum 1 bzw. die Figuren 2 bis 4 nicht eingezeichnet. Bei einem Messergebnis mit zu hohem O₂-Gehalt wird in den laufenden Prozess entsprechend regelnd eingegriffen. Dabei kann je nach Wert und Messort Stickstoff zugegeben oder der Prozess beendet werden.

Die Erfindung löst in optimaler Weise die eingangs gestellte Aufgabe.

### Liste der Bezugszeichen

- 1.: Anlagenstammbaum
- 2.: Heißgas-Leitung
- 3.: Gastransportleitung
- 4.: Ofenstation

- 10.: Heißgas-Filter
- 11.: Exhaustor
- 12.: Abgasleitung
- 13.: Schieber
- 14.: Schieber
- 15.: Staubbehälter
- 16.: Transportbehälter Zuschlagstoffe (Salz)
- 17.: Sammelbehälter Zuschlagstoffe
- 18.: Reingasleitung
- 19.: Eintragsleitung

- 20.: Abscheider
- 21.: Chargierschleuse
- 22.: Schieber
- 23.: Hohlelektrode
- 24.: Transformator
- 25.: Elektro-Schmelzofen
- 26.: Abgas-Leitung
- 27.: Schlackenabstich
- 28.: Metallabstich
- 29.: Boden-Kathode
- 30.: Ofendeckel I
- 31.: Ofendeckel II

- 32.: Schmelzraum
- 33.: Absetzraum beheizbar
- 34.: Wall
- 35.: Unterlauföffnungen
- 36.: Schlacke
- 37.: flüssiges Metall
- 38.: Ofenwand
- 39.: Überlaufkante

- 40.: Ofenwand
- 41.: Gasanschluss
- 42.: Gasanschluss
- 43.: zentrale Bohrung

## Patentansprüche

1. Verfahren zur Aufbereitung bzw. Aufarbeitung von beim Sprühkompaktieren anfallendem metallischem Overspray-Material in Form eines im Abgas mitgeführten Pulvers, **dadurch gekennzeichnet, dass** das Pulver aus dem Gasstrom abgetrennt, gesammelt, unter Schutz durch Inertgas chargenweise mit Zuschlagstoffen versetzt in eine Schlackenschmelze (36) eingeleitet und darin unter Wärmezufuhr mittels Sedimentation flüssiges Metall (37) abgeschieden wird.

2. Verfahren nach Anspruch 1, **dadurch gekennzeichnet**, das es gleichzeitig mit der Sprühkompaktierung eines Objektes durchgeführt wird, wobei das anfallende und staubförmig im Abgas mitgeführte Overspray-Material abgeschieden und auf direktem Wege in eine dafür vorgesehene Verarbeitungsanlage eingeführt wird.

3. Verfahren nach Anspruch 1 oder 2, **dadurch gekennzeichnet, dass** das Overspray-Material in Form von Pulver aus dem heißen Abgasstrom einer Sprüh-Kompaktierungsanlage unter Zugabe von Schutzgas wie N₂ ausgefiltert, weiterhin unter Schutzgas chargenweise gesammelt und mit dosierbar bemessenen Anteilen von Zuschlagstoffen, insbesondere Schmelzsalz, in die Schlackenschmelze (36) eingeführt und daraus die beiden Phasen Schlacke und Metall (37) in getrennten Abstichen (27, 28) abgezogen werden.

4. Verfahren nach einem oder mehreren der Ansprüche 1 bis 3, **dadurch gekennzeichnet, dass** die Aufarbeitung des Pulvers in Salzschlacke (36) und Metall (37) in einer ununterbrochenen Folge von Arbeitsschritten im Anschluss an dessen Gewinnung aus dem heißen Abgasstrom einer Sprüh-Kompaktierungsanlage unter Schutzgas (N₂) vorgenommen wird.

5. Verfahren nach einem oder mehreren der Ansprüche 1 bis 4, **dadurch gekennzeichnet, dass** das aus dem Heißgasstrom ausgefilterte und mit Zuschlagstoff (16, 17) versetzte Material durch eine zentrale Bohrung (43) einer als Anode geschalteten Elektrode (23) in den Schmelzraum (32) eines Schmelze enthaltenden Doppelraum-Elektro-Schmelzofens (25) eingeführt und darin durch Widerstands-Elektroheizung im Spannungsgefälle zwischen der am Boden des Schmelzraumes (32) angeordneten Kathode (29) und der Anode (23) geschmolzen wird.

6. Anlage zur Aufbereitung von beim Sprühkompaktieren in Form von Pulver anfallendem, metallischem Overspray-Material, insbesondere zur Durchführung des Verfahrens nach der Erfindung, **gekennzeichnet durch** die miteinander zusammenwirkenden Elemente:
- eine Heißgasleitung (2) zum Anschluss an eine vorgeordnete Sprüh-Kompaktierungsanlage,
- ein an die Leitung (2) angeschlossenes Heißgas-Filter (10) mit austrittsseitig angeordnetem Reingas-Saugzug-Gebläse (11) und Abgasleitung (12),
- ein mit Absperrschiebern (13, 13') an den Heißgasfilter (10) unterseitig angeschlossener Pulverbehälter (15) mit Zuführung für Schutzgas N₂, sowie unterseitig einer Verbindung zu einer Leitung für pneumatischen Feststofftransport (3),
- eine dosierbare Zuteilung für Zuschlagstoffe, umfassend ein Schleusensystem mit einem Transport- (16) und Sammel-Behälter (17), abschottbar mit Schiebern (14, 14'),
- einen am Ende der Gastransportleitung (3) angeschlossenen Abscheidebehälter (20), z. B. Zyklon oder Filter, umfassend unterseitig eine Chargierschleuse (21) mit Schiebern (22, 22'), sowie unterseitig daran anschließend
- einen Doppelraum-Elektro-Schmelzofen (25), umfassend eine als Anode geschaltete Hohlelektrode (23) zur Durchleitung der aus der Transportleitung (3) ausgetragenen Feststoffe, einen Transformator (24), eine Abgasleitung (26) aus dem Ofenraum zu einer Abgasreinigung, einen Schlackenabstich (27) auf ca. mittlerer Höhe des Elektro-Schmelzofens (25), einen Metallabstich (28) im Bodenbereich des Elektro-Schmelzofens (25), sowie eine den Bodenabschluss bildende Kathode (29).

7. Anlage nach Anspruch 6, **dadurch gekennzeichnet, dass** sie ein in sich abgeschlossenes System darstellt, welches mit einer oder mehreren Schutzgasquellen derart verbunden ist, dass in der Anlage ein Gasüberdruck relativ zur Umgebungsatmosphäre herrscht.

8. Anlage nach Anspruch 6 oder 7, **dadurch gekennzeichnet, dass** der Heißgas-filter (10) mit einer Anzahl poröser Filterkerzen, beispielsweise aus Korund-Partikeln, ausgestattet ist und die Abreinigung derselben mittels Inertgas, z. B. N₂, durchgeführt wird.

9. Anlage nach einem oder mehreren der Ansprüche 6 bis 8, **dadurch gekennzeichnet, dass** der Doppelraum-Elektro-Schmelzofen (25) in einen Schmelzraum (32) und einen beheizbaren Absetzraum (33) unterteilt ist, zwischen welchen sich ein als Wehr ausgebildeter Wall (34), bevorzugt in Form eines Teils der kreisförmigen Ofenwand (38) des Schmelzraums (32) befindet, die in Bodennähe Unterlauföffnungen (35) zum Durchtritt der spezifisch schwereren Metallphase (37), und an ihrer Oberseite eine Überlaufkante (39) für den Übertritt der spezifisch leichteren Salzschlackenphase besitzt.

10. Anlage nach einem oder mehreren der Ansprüche 6 bis 9, **dadurch gekennzeichnet, dass** der Schlackenabstich (27) in der Ofenwand (38) etwa in Höhe der Überlaufkante (39), und der Metallabstich (28) in Bodennähe angeordnet ist.

11. Anlage nach einem oder mehreren der Ansprüche 6 bis 10, **dadurch gekennzeichnet, dass** in den Wänden des Feststoffbehälters (15), des Behälters (17) für Zuschlagstoffe, sowie in den Ofenwänden (38) bzw. (40) Anschlüsse zum Einleiten von Inertgas, z. B. N₂, vorhanden sind.

12. Anlage nach einem oder mehreren der Ansprüche 6 bis 11, **dadurch gekennzeichnet, dass** der Schmelzraum (32) als Gleichstrom-Elektro-Schmelzofen ausgebildet ist, der eine als Anode (23) und am Boden eine als Kathode (29) geschaltete Elektrode besitzt, deren Funktion zum Wärmeeintrag durch Bereitstellen einer Schicht von beispielsweise einer kryolitischen Salzschlacke mit vergleichsweise hohem elektrischem Widerstand gewährleistet ist.

13. Anlage nach einem oder mehreren der Ansprüche 6 bis 12, **dadurch gekennzeichnet, dass** der Boden des beheizbaren Absetzraums (33) zur Abstichseite hin ein Gefälle aufweist.

14. Anlage nach einem oder mehreren der Ansprüche 6 bis 13, **dadurch gekennzeichnet, dass** die Heizeinrichtungen wie elektrische Heizstäbe, Heizplatten oder Heizspiralen derart ausgelegt sind, dass keine den Absetzvorgang störenden Badströmungen entstehen.
